# FASCICULE DE BREVET EUROPEEN

(11) **EP 2 475 553 B1**
(45) Date de publication et mention de la délivrance du brevet: **07.10.2015**
(21) Numéro de dépôt: 10763781.1
(22) Date de dépôt: 31.08.2010
(51) Int. Cl.: B60R 16/023

(54) **BOÎTIER D'INTERCONNEXION POUR LE RACCORDEMENT ÉLECTRIQUE DE COMPOSANTS À DES ÉQUIPEMENTS D'UN VÉHICULE AUTOMOBILE**
ANSCHLUSSDOSE ZUR ELEKTRISCHES VERBINDEN VON KOMPONENTEN AN GERÄTE EINES KRAFTFAHRZEUGES
CONNECTION BOX FOR THE ELECTRIC CONNECTION OF COMPONANTS TO EQUIPMENT OF VEHICLES

(30) Priorité: 09.09.2009 FR 0956148
(43) Date de publication de la demande: 18.07.2012
(73) Titulaire: Peugeot Citroën Automobiles SA, 78140 Vélizy Villacoublay (FR)
(72) Inventeur: DUFOUR, Régis, F-91300 Massy (FR)
(86) Numéro de dépôt international: PCT/FR2010/051807
(87) Numéro de publication internationale: WO 2011/030040

(56) Documents cités:
- WO-A1-96/00156
- WO-A2-2007/122468
- DE-A1- 3 603 158
- DE-A1- 3 824 857
- DE-A1- 4 003 103
- US-A- 3 146 052
- US-A- 4 861 282

## Description

L'invention concerne certains boîtiers qui sont destinés à assurer l'interconnexion électrique de certains composants avec des équipements qui sont implantés dans certains véhicules automobiles, éventuellement de type hybride.

Comme le sait l'homme de l'art, certains véhicules automobiles comprennent des équipements qui doivent être raccordés électriquement à des composants électriques ou électroniques rapportés et implantés dans une même zone, comme par exemple et non limitativement un onduleur convertisseur de courant continu/continu (ou DC/DC) ou un module de pilotage électronique d'équipement(s). Pour ce faire, les composants (électriques ou électroniques) sont généralement solidarisés à une paroi les uns après les autres et les uns à côté des autres, éventuellement de part et d'autre de la paroi.

On comprendra que la solidarisation de chaque composant à la paroi prend un certain temps, et donc accroît les coups des véhicules automobiles et des réparations ou opérations de maintenance.

Par ailleurs, lorsque l'espace est très limité on peut être obligé d'implanter les composants de part et d'autre de la paroi, ce qui complexifie encore plus leur solidarisation et peut nécessiter la définition dans la paroi, au voisinage des composants, de plusieurs traversées pour le passage de câbles électriques lorsque les équipements auxquels ils doivent être raccordés électriquement sont situés sur un côté de la paroi qui est opposé à celui où ils doivent être implantés. On comprendra que l'étude et la réalisation de ces traversées et des gaines de passage de câbles ou de tuyaux associées sont onéreuses, et qu'en outre ces traversées posent non seulement des problèmes d'étanchéité mais également des problèmes d'immobilisation des câbles électriques de raccordement.

L'invention a donc notamment pour but de proposer un boîtier d'interconnexion destiné à remédier à tout ou partie des inconvénients précités.

Elle propose à cet effet un boîtier d'interconnexion selon le préambule de la revendication 1 connu du document US 4 861 282 A en combinaison avec les caractéristiques de la partie caractérisante de la revendication 1.

Le boîtier d'interconnexion selon l'invention peut comporter d'autres caractéristiques qui peuvent être prises séparément ou en combinaison, et notamment :
- ses première et seconde parties peuvent être destinées à être situées respectivement en dessous et au dessus de la paroi ;
- dans une variante, ses première et seconde parties peuvent être destinées à être situées respectivement au dessus et en dessous de la paroi ;
   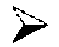 le premier composant peut être un onduleur convertisseur de courant continu/continu (ou DC/DC) ;
   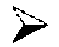 le second composant peut être un module de pilotage électronique d'équipement(s) du véhicule ;
- sa première partie et/ou sa seconde partie peu(ven)t être pourvue(s) d'ouvertures propres à permettre le raccordement de câbles électriques ou de tuyaux à des moyens de connexion des composants ;
- il peut être destiné à équiper un véhicule automobile de type hybride ;
- il peut être destiné à être solidarisé à une paroi qui constitue un fond d'un renfoncement qui est défini dans une partie arrière d'un plancher du véhicule automobile.

De préférence, la seconde partie est un parallélépipède dont une première face est en appui sur la paroi et dont au moins deux arêtes, respectivement situées entre deux autres faces, non parallèles à la première face, et la première face, sont en appui, au moins partiellement, sur la paroi.

De préférence, la seconde partie est un parallélépipède dont le volume est rempli par le ou les composants suffisamment pour que ce ou ces composants ne puissent pas passer au travers de l'ouverture, même en l'absence des parois du boîtier d'interconnexion.

Préférentiellement, la seconde partie est un parallélépipède dont une première face est en appui sur la paroi et dont au moins quatre arêtes, respectivement situées entre quatre autres faces, non parallèles à la première face, et la première face, sont en appui, au moins partiellement, sur la paroi.

Préférentiellement, la seconde partie est un parallélépipède dont une première face est en appui sur la paroi et dont au moins quatre coins, partiellement définis par la première face, sont en appui sur la paroi.

Avantageusement, tous les appuis partiels sont des appuis complets, c'est-à-dire que les arêtes sont en appuis sur la paroi sur toute leur longueur.

Avantageusement, le parallélépipède est un parallélépipède rectangle.

De façon similaire, préférentiellement, la première partie (P1) est un parallélépipède dont une première face qui est parallèle à la première face de la seconde partie (P2) et qui est située contre elle, est moins étendue qu'elle dans toutes les directions.

Un composant est un composant électronique réalisant sa propre fonction électronique, et ne pouvant se réduire à transporter le signal électrique comme un simple fil électrique, comme dans le document US 4861282.

La seconde partie et la première parties constituent un ensemble monobloc.

Des avantages de l'invention apparaîtront à l'examen de la description détaillée ci-après, et des dessins annexés, sur lesquels :
- la figure 1 illustre schématiquement et fonctionnellement, dans une vue en coupe, un exemple de réalisation de boîtier d'interconnexion selon l'invention solidarisé à une paroi qui constitue le fond d'un renfoncement de plancher de véhicule automobile,
- la figure 2 illustre schématiquement, dans une vue en perspective du dessous, un exemple de réalisation de boîtier d'interconnexion selon l'invention,
- la figure 3 illustre schématiquement, dans une vue en perspective du dessus, le boîtier d'interconnexion de la figure 2.

Les dessins annexés pourront non seulement servir à compléter l'invention, mais aussi contribuer à sa définition, le cas échéant.

L'invention a pour but d'offrir un boîtier d'interconnexion (B) destiné à être solidarisé à une paroi (PA) d'un véhicule automobile et logeant au moins un composant (Ci) devant être raccordé électriquement à des équipements (Ej) de ce véhicule qui sont situés en dessous et au dessus de la paroi (PA).

Dans ce qui suit, on considère, à titre d'exemple non limitatif, que la paroi (PA) est le fond d'un renfoncement qui est défini dans la partie arrière d'un plancher d'un véhicule automobile (comme par exemple une voiture). Mais, l'invention n'est pas limitée à ce type de paroi.

Par ailleurs, on considère dans ce qui suit, à titre d'exemple non limitatif, que le véhicule automobile est de type hybride (c'est-à-dire comportant à la fois un moteur à combustion et au moins un moteur électrique destinés à entraîner ses roues). Mais, l'invention n'est pas limitée à ce type de véhicule automobile. Elle concerne en effet tout type de véhicule automobile comportant au moins une paroi du type précité.

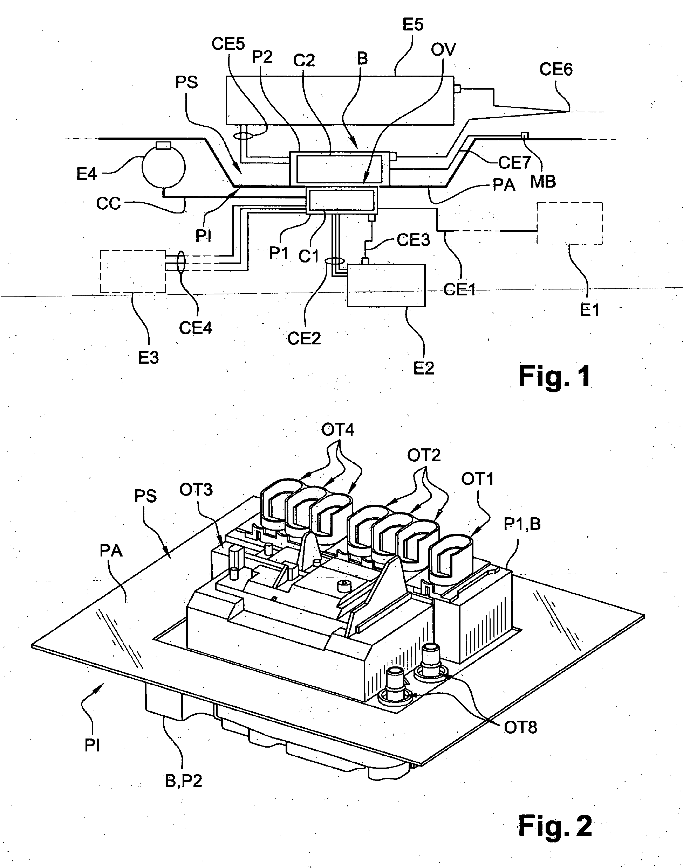

On a schématiquement représenté sur la figure 1 un exemple de réalisation d'un boîtier d'interconnexion B selon l'invention, solidarisé à une paroi PA d'un véhicule (automobile), ici située dans une partie arrière du plancher où sont implantés plusieurs équipements concernés par l'invention (par exemple E2, E4 et E5). A titre d'exemple non limitatif, l'équipement E2 peut être un dispositif (ou une machine) électrique destiné(e) à entraîner en rotation les roues arrière du véhicule, l'équipement E4 peut être un dispositif de refroidissement par circulation de fluide (comme par exemple de l'eau) destiné à refroidir un (premier) composant C1 (logé dans le boîtier d'interconnexion B), et l'équipement E5 peut être une batterie haute tension (par exemple de 200 volts) destinée à alimenter en énergie électrique l'équipement E2 via le premier composant C1.

A titre d'exemple non limitatif, le premier composant C1 peut être un onduleur convertisseur de courant continu/continu (ou DC/DG).

Selon un aspect de l'invention, et comme illustré sur la figure 1, le boîtier d'interconnexion B comprend des première P1 et seconde P2 parties qui sont solidarisées entre elles et destinées à loger au moins un composant Ci. Dans les exemples non limitatif illustrés sur les figures 1 à 3, le boîtier d'interconnexion B loge des premier C1 et second C2 composants (i = 1 ou 2). Mais, il pourrait ne loger qu'un seul composant Ci ou bien plus de deux composants Ci.

Il est important de noter que, selon l'invention, les première P1 et seconde P2 parties ne sont pas distinctes: Il s'agit de deux parties d'une même pièce monobloc, par exemple réalisée par moulage dans un matériau plastique ou synthétique.

Lorsque les première P1 et seconde P2 parties sont deux pièces distinctes, leur solidarisation peut se faire par tout moyen connu de l'homme de l'art, et notamment par clippage ou vissage ou bien au moyen de bride(s). Dans ce mode de réalisation, les première P1 et seconde P2 parties peuvent par exemple être réalisées par moulage dans un matériau plastique ou synthétique.

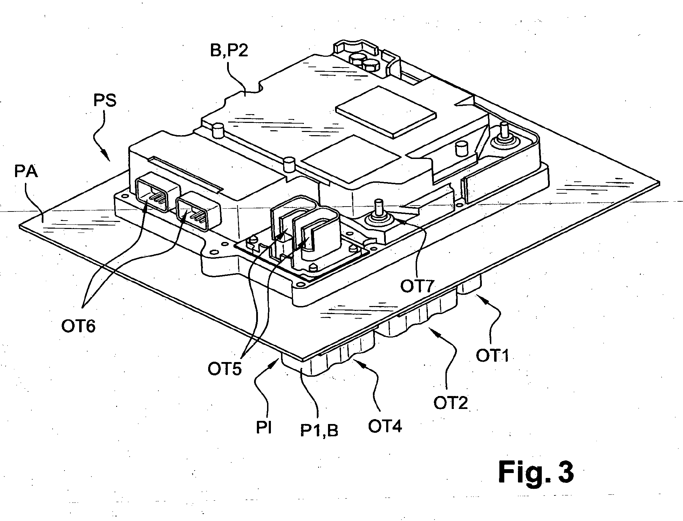

On notera également que la solidarisation du boîtier d'interconnexion B à la paroi PA peut se faire par tout moyen connu de l'homme de l'art, et notamment par clippage ou vissage (comme illustré dans l'exemple de réalisation non limitatif de la figure 3).

Selon l'invention, la première partie P1 présente une forme qui est adaptée à son passage au travers d'une ouverture traversarite OV qui est définie en un endroit choisi de la paroi PA.

Dans les exemples de réalisation illustrés sur les figures 1 à 3, l'ouverture OV est sensiblement rectangulaire. Par conséquent, la première partie P1 présente une forme qui est grossièrement parallélépipédique rectangle. Mais, l'ouverture OV peut présenter de nombreuses autres formes, géométriques ou non, dès lors que ces formes peuvent permettre le passage d'une première partie P1.

La seconde partie P2 présente une forme qui interdit son passage au travers de l'ouverture OV. En d'autres termes, sa forme considérée d'un point de vue purement géométrique peut être similaire ou identique à celle de l'ouverture OV, mais sa forme considérée d'un point de vue purement dimensionnel doit différer (et plus précisément être plus grande) que celle de l'ouverture OV suivant au moins une direction définissant le plan contenant sensiblement cette dernière (OV).

Les formes respectives des première P1 et seconde P2 parties dépendent notamment du ou des composants Ci que ces dernières (P1, P2) doivent respectivement loger, de l'encombrement local et donc de l'environnement, et des emplacements respectifs des équipements Ej voisins (ici E2, E4 et E5).

On comprendra que l'ouverture OV constitue une unique traversée dans la paroi PA, facile à réaliser et au travers de laquelle on introduit facilement la première partie P1 en vue de la solidarisation du boîtier d'interconnexion B à ladite paroi PA. Le boîtier d'interconnexion B constitue ainsi une interface de raccordement électrique qui permet d'éviter d'utiliser des gaines passe-câble(s).

Il est important de noter que la première partie P1 peut être introduite dans l'ouverture OV soit de haut en bas afin de se retrouver finalement implantée dans une partie PI dite inférieure du fait qu'elle est située en dessous de la paroi PA (tandis que la seconde partie P2 se retrouve finalement implantée dans une partie PS dite supérieure du fait qu'elle est située au dessus de la paroi PA), comme illustré sur les figures 1 à 3, soit de bas en haut afin de se retrouver finalement implantée dans la partie supérieure PS (au dessus de la paroi PA) (tandis que la seconde partie P2 se retrouve finalement implantée dans la partie inférieure PI (en dessous de la paroi PA). La première solution (P1 en bas (PI) et P2 en haut (PS)) est actuellement préférée car la seconde partie P2 est alors supportée par la paroi PA, ce qui améliore la solidarisation et l'étanchéité en présence de vibrations et de chocs.

On notera que pour assurer une bonne étanchéité aux fluides et absorber les vibrations et chocs du véhicule, il est avantageux de prévoir un joint (ou plus généralement un moyen) d'étanchéité: Ce dernier peut soit équiper l'ouverture OV, soit être situé à l'interface entre les première P1 et seconde P2 parties.

Grâce aux formes respectives des première P1 et seconde P2 parties, chaque composant Ci, logé dans le boîtier d'interconnexion B, peut être très facilement raccordé électriquement à chacun des équipements Ej qui lui correspond.

On notera que les première P1 et seconde P2 parties sont éventuellement communicantes, comme dans l'exemple non limitatif qui est illustré sur la figure 1. Cette communication est avantageuse lorsque l'on doit raccorder électriquement un composant Ci, qui est logé dans l'une des première P1 et seconde P2 parties qui est située d'un côté de la paroi PA, à au moins un équipement Ej qui est situé de l'autre côté de cette même paroi PA.

Dans les exemples non limitatifs illustrés sur les figures 1 à 3, le boîtier d'interconnexion B loge des premier C1 et second C2 composants (i = 1 ou 2). Mais, il pourrait ne loger qu'un seul composant Ci ou bien plus de deux composants Ci.

Plus précisément, la première partie P1 loge un premier composant C1 (ici un onduleur convertisseur de courant continu/continu), et la seconde partie P2 loge un second composant C2 (ici un module de pilotage électronique d'équipement(s) Ej (et notamment E2)).

Comme illustré sur la figure 1 :
- le premier composant C1 doit être connecté électriquement i) à la batterie 12 volts E1 du véhicule (généralement située dans le compartiment moteur) via un câble CE1, ii) au dispositif (ou machine) électrique E2 destiné(e) à entraîner en rotation les roues arrière du véhicule, via des câbles CE2 et un sous-faisceau électrique CE3 (dans le cas d'un véhicule hybride), iii) à l'alternateur/démarreur E3 du véhicule (généralement situé dans le compartiment moteur), via des câbles CE4, iv) à un dispositif de refroidissement par circulation de fluide E4 chargé de le refroidir, via des tuyaux CS, v) à la batterie haute tension E5 (située au dessus de la paroi PA), via des câbles CE5, et vi) au faisceau électrique principal CE6 du véhicule, et
- le second composant C2 doit être connecté électriquement i) au premier composant C1, ii) à la batterie 12 volts E1 du véhicule (généralement située dans le compartiment moteur), via le câble CE1, iii) au faisceau électrique principal CE6 du véhicule, ainsi qu'éventuellement iv) à la batterie haute tension E5, via les câbles CE5.

On notera que dans les exemples non limitatifs illustrés sur les figures 1 à 3, le boîtier d'interconnexion B est également connecté à la masse MB de la batterie haute tension E5 via un câble CE7.

Afin de permettre tous ces raccordements, les composants Ci sont pourvus en des endroits choisis de connecteurs qui, au moins pour certains d'entre eux, sont accessibles via des ouvertures OTk (ici k = 1 à 8, à titre d'exemple illustratif) définies en des endroits choisis des première P1 et seconde P2 parties du boîtier d'interconnexion BI.

L'objectif de ce boîtier d'interconnexion B est avant tout de loger au moins les deux composants C1 et C2 indiqués ci-avant afin de simplifier et/ou optimiser leur installation au niveau de la paroi PA du véhicule et leur raccordement à des équipements Ej de ce véhicule.

L'invention offre un certain nombre d'avantages, parmi lesquels :
- un regroupement de composants à raccorder dans un espace réduit,
- une simplification des opérations de solidarisation (ou montage) et de désolidarisation (ou démontage) des composants à raccorder,
- une simplification des raccordements des composants aux équipements correspondants,
- une amélioration de l'étanchéité du fait du placage de la seconde partie contre la paroi du véhicule,
- la réalisation d'une unique traversée (ou ouverture) dans une paroi du véhicule,
- un gain de temps de montage/démontage et de développement du fait de l'absence de gaine de passage de câbles et de tuyaux,
- une diminution du poids et une réduction des coûts du fait de la réduction des longueurs des câbles et des tuyaux permise par la réduction du nombre de portions courbes.

L'invention ne se limite pas aux modes de réalisation de boîtier d'interconnexion décrits ci-avant, seulement à titre d'exemple, mais elle englobe toutes les variantes que pourra envisager l'homme de l'art dans le cadre des revendications ci-après.

## Revendications

1. Boîtier logeant des composants (Ci) devant être raccordés électriquement à des équipements (Ej) d'un véhicule, lesdits équipements étant situés de part et d'autre d'une paroi (PA) du véhicule, ladite paroi étant apte à recevoir le boîtier, le boîtier comprenant i) une première partie (P1) présentant une forme adaptée à son passage au travers d'une ouverture (OV) définie dans ladite paroi (PA), et ii) une seconde partie (P2) solidarisée à ladite première partie (P1) et présentant une forme interdisant son passage au travers de ladite ouverture (OV), lesdites première (P1) et seconde (P2) parties logeant chacune au moins un composant et communiquant entre elles pour permettre un raccordement électrique du composant (Ci) d'une des deux parties d'un côté de la paroi à au moins un des équipements (Ej) qui est situé de l'autre côté de cette même paroi, **caractérisé en ce que** lesdites première (P1) et seconde (P2) parties forment une pièce monobloc et logent chacune, de plus, au moins un composant électronique, la première partie P1 logeant au moins un premier composant électronique C1 et la seconde partie P2 logeant au moins un second composant électronique C2, ces composants électroniques communiquant entre eux et avec au moins un des équipements (Ej) qui est situé de l'autre côté de la paroi.

2. Boîtier selon la revendication 1, **caractérisé en ce que** lesdites première (P1) et seconde (P2) parties sont destinées à être situées respectivement en dessous et au-dessus de ladite paroi (PA).

3. Boîtier selon l'une des revendications 1 et 2, **caractérisé en ce que** lesdites première (P1) et seconde (P2) parties sont destinées à être situées respectivement au-dessus et en dessous de ladite paroi (PA).

4. Boîtier selon l'une des revendications 1 à 3, **caractérisé en ce que** l'un des composants électroniques (C1) est un onduleur convertisseur de courant continu/continu.

5. Boîtier selon l'une des revendications 1 à 4, **caractérisé en ce que** l'un des composants électroniques (C2) est un module de pilotage électronique d'équipement(s) (Ej) dudit véhicule.

6. Boîtier selon l'une des revendications 1 à 5, **caractérisé en ce que** ladite première partie (P1) et/ou ladite seconde partie (P2) est/sont pourvue(s) d'ouvertures (OTk) propres à permettre le raccordement de câbles électriques ou de tuyaux à des moyens de connexion desdits composants (Ci).

7. Boîtier selon l'une des revendications 1 à 6, **caractérisé en ce qu'**il est destiné à équiper un véhicule automobile de type hybride.

8. Boîtier selon l'une des revendications 1 à 7, **caractérisé en ce qu'**il est destiné à être solidarisé à une paroi (PA) constituant un fond d'un renfoncement défini dans une partie arrière d'un plancher dudit véhicule automobile.

9. Boîtier selon l'une des revendications précédentes, **caractérisé en ce que** la seconde partie (P2) est un parallélépipède dont une première face est en appui sur la paroi (PA) et dont au moins deux arêtes, respectivement situées entre deux autres faces, non parallèles à la première face, et la
première face, sont en appui, au moins partiellement, sur la paroi (PA).

10. Boîtier selon l'une des revendications précédentes, **caractérisé en ce que** la seconde partie (P2) est un parallélépipède dont le volume est rempli par le ou les composants électroniques (Ci) suffisamment pour que ce ou ces composants électroniques (Ci) ne puissent pas passer au travers de l'ouverture (OV), même en l'absence des parois du boîtier d'interconnexion.

## Patentansprüche

1. Dose, die Bauteile (Ci) aufnimmt, die elektrisch an Ausstattungen (Ej) eines Fahrzeugs angeschlossen werden sollen, wobei die Ausstattungen zu beiden Seiten einer Wand (PA) des Fahrzeugs liegen, wobei die Wand geeignet ist, um die Dose aufzunehmen, wobei die Dose i) einen ersten Teil (P1) aufweist, der eine angepasste Form für seine Passage durch eine Öffnung (OV), die in der Wand (PA) definiert ist, aufweist, und ii) einen zweiten Teil (P2), der fest mit dem ersten Teil (P1) verbunden ist und eine Form aufweist, die seine Passage durch die Öffnung (OV) untersagt, wobei der erste Teil (P1) und der zweite Teil (P2) jeweils mindestens ein Bauteil aufnehmen und miteinander kommunizieren, um einen elektrischen Anschluss des Bauteils (Ci) eines der zwei Teile auf einer Seite der Wand an mindestens eine der Ausstattungen (Ej), die sich auf der anderen Seite ein und derselben Wand befindet, zu erlauben, **dadurch gekennzeichnet, dass** der erste Teil (P1) und der zweite Teil (P2) ein einstückiges Teil bilden und jeweils außerdem mindestens ein elektronisches Bauteil aufnehmen, wobei der erste Teil P1 mindestens ein erstes elektronisches Bauteil C1 und der zweite Teil P2 mindestens ein zweites elektronisches Bauteil C2 aufnimmt, wobei diese elektronischen Bauteile miteinander und mit mindestens einer der Ausstattungen (Ej), die sich auf der anderen Seite der Wand befindet, kommunizieren.

2. Dose nach Anspruch 1, **dadurch gekennzeichnet, dass** der erste Teil (P1) und der zweite Teil (P2) dazu bestimmt sind, jeweils unterhalb und oberhalb der Wand (PA) zu liegen.

3. Dose einem der Ansprüche 1 und 2, **dadurch gekennzeichnet, dass** der erste Teil (P1) und der zweite Teil (P2) dazu bestimmt sind, jeweils oberhalb und unterhalb der Wand (PA) zu liegen.

4. Dose nach einem der Ansprüche 1 bis 3, **dadurch gekennzeichnet, dass** eines der elektronischen Bauteile (C1) ein Gleichstrom/Gleichstrom-Wechselrichter ist.

5. Dose nach einem der Ansprüche 1 bis 4, **dadurch gekennzeichnet, dass** eines der elektronischen Bauteile (C2) ein elektronisches Steuermodul einer (von) Ausstattung(en) (Ej) des Fahrzeugs ist.

6. Dose nach einem der Ansprüche 1 bis 5, **dadurch gekennzeichnet, dass** der erste Teil (P1) und/oder der zweite Teil (P2) mit Öffnungen (OTk), die geeignet sind, um das Anschließen elektrischer Kabel oder Leitungen an Anschlussmittel der Bauteile (Ci) zu erlauben, versehen ist/sind.

7. Dose nach einem der Ansprüche 1 bis 6, **dadurch gekennzeichnet, dass** sie dazu bestimmt ist, ein Kraftfahrzeug des hybriden Typs auszustatten.

8. Dose nach einem der Ansprüche 1 bis 7, **dadurch gekennzeichnet, dass** sie dazu bestimmt ist, fest mit einer Wand (PA), die einen Boden einer Vertiefung bildet, die in einem hinteren Teil eines Fußboden des Kraftfahrzeugs definiert ist, verbunden zu werden.

9. Dose nach einem der vorhergehenden Ansprüche, **dadurch gekennzeichnet, dass** der zweite Teil (P2) ein Parallelepiped ist, von dem eine erste Seite auf der Wand (PA) aufliegt, und von dem mindestens zwei Kanten, die sich jeweils zwischen zwei anderen Seiten befinden, die nicht zu der ersten Seite parallel sind, liegen, und die erste Seite mindestens teilweise auf der Wand (PA) aufliegen.

10. Dose nach einem der vorhergehenden Ansprüche, **dadurch gekennzeichnet, dass** der zweite Teil (P2) ein Parallelepiped ist, dessen Volumen von dem oder den elektronischen Bauteilen (Ci) ausreichend gefüllt ist, damit dieses oder diese elektronischen Bauteile (Ci) nicht durch die Öffnung (OV) auch bei Fehlen der Wände des Anschlussgehäuses durchgehen können.

## Claims

1. A box housing components (Ci) that are to be electrically connected to devices (Ej) of a vehicle, said devices being situated on either side of a wall (PA) of the vehicle, said wall being able to receive the box, the box comprising i) a first part (P1) which has a shape allowing the part to penetrate an opening (OV) defined in said wall (PA), and ii) a second part (P2) secured to said first part (P1) and having a shape preventing the second part from penetrating said opening (OV), said first (P1) and second (P2) parts each housing at least one component and communicating with one another to permit an electrical connection of the component (Ci) of one of the two parts on one side of the wall to at least one of the devices (Ej) which is situated on the other side of this same wall, **characterized in that** said first (P1) and second (P2) parts form a single-unit piece and each house, in addition, at least one electronic component, the first part P1 housing at least a first electronic component C1 and the second part P2 housing at least a second electronic component C2, these electronic components communicating with one another and with at least one of the devices (Ej) which is situated on the other side of the wall.

2. The box according to Claim 1, **characterized in that** said first (P1) and second (P2) parts are intended to be situated respectively below and above said wall (PA).

3. The box according to one of Claims 1 and 2, **characterized in that** said first (P1) and second (P2) parts are intended to be situated respectively above and below said wall (PA).

4. The box according to one of Claims 1 to 3, **characterized in that** one of the electronic components (C1) is a direct current/direct current inverter converter.

5. The box according to one of Claims 1 to 4, **characterized in that** one of the electronic components (C2) is an electronic control module of (a) device(s) (Ej) of said vehicle.

6. The box according to one of Claims 1 to 5, **characterized in that** said first part (P1) and/or said second part (P2) is/are provided with openings (OTk) able to permit the connection of electric cables or of pipes to connection means of said components (Ci).

7. The box according to one of Claims 1 to 6, **characterized in that** it is intended to equip a motor vehicle of the hybrid type.

8. The box according to one of Claims 1 to 7, **characterized in that** it is intended to be secured to a wall (PA) constituting a bottom of a recess defined in a rear part of a floor of said motor vehicle.

9. The box according to one of the preceding claims, **characterized in that** the second part (P2) is a parallelepiped, a first face of which rests on the wall (PA) and of which at least two edges, respectively situated between two other faces, not parallel to the first face, and the first face, rest, at least partially, on the wall (PA).

10. The box according to one of the preceding claims, **characterized in that** the second part (P2) is a parallelepiped, the volume of which is filled by the electronic component(s) (Ci) sufficiently for this or these electronic component(s) (Ci) not to be able to penetrate the opening (OV), even in the absence of the walls of the junction box.
